(19) Europäisches Patentamt
European Patent Office
Office européen des brevets

(11) **EP 3 545 792 B1**

(12) **EUROPÄISCHE PATENTSCHRIFT**

(45) Veröffentlichungstag und Bekanntmachung des Hinweises auf die Patenterteilung:
**17.09.2025   Patentblatt 2025/38**

(21) Anmeldenummer: **19165999.4**

(22) Anmeldetag: **28.03.2019**

(51) Internationale Patentklassifikation (IPC):
*A46B 5/00* (2006.01)      *A46B 13/00* (2006.01)

(52) Gemeinsame Patentklassifikation (CPC):
**A46B 13/008; A46B 5/0091; B60S 3/042;**
A46B 2200/3046

(54) **BÜRSTE ZUR REINIGUNG VON FAHRZEUGRÄDERN**

BRUSH FOR CLEANING VEHICLE WHEELS

BROSSE DE NETTOYAGE DE ROUES DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2018   DE 202018101792 U**

(43) Veröffentlichungstag der Anmeldung:
**02.10.2019   Patentblatt 2019/40**

(73) Patentinhaber: WashTec Holding GmbH
**86153 Augsburg (DE)**

(72) Erfinder: **STEININGER, Franz**
**86424 Dinkelscherben (DE)**

(74) Vertreter: **Meissner Bolte Partnerschaft mbB**
**Patentanwälte Rechtsanwälte**
**Postfach 86 06 24**
**81633 München (DE)**

(56) Entgegenhaltungen:
EP-A1- 3 246 217          EP-A1- 3 266 342
EP-A2- 1 561 658          EP-A2- 2 287 053
DE-U1- 202011 110 362     GB-A- 2 082 991

**Beschreibung**

Die vorliegende Erfindung betrifft eine Bürste zur Reinigung von Fahrzeugrädern. Die Bürste umfasst eine um eine Zentralachse drehbare Hauptbürste, die einen Radius und eine Aussparung aufweist. Die Bürste umfasst ferner eine um eine Längsachse drehbare Nebenbürste, die einen Wirkradius aufweist, wobei die Längsachse der Nebenbürste in einem Abstand von der Zentralachse angeordnet ist, der Wirkradius kleiner als der Radius der Hauptbürste ist, die Nebenbürste in der Aussparung der Hauptbürste angeordnet ist und die Nebenbürste bei einer Rotation der Hauptbürste um die Zentralachse mit der Aussparung mitrotiert. Weiterhin umfasst die Bürste Reinigungselemente, die stirnseitig an der Hauptbürste und der Nebenbürste angeordnet sind. Die Erfindung betrifft ferner eine Vorrichtung mit einer solchen Bürste.

Bei herkömmlichen Reinigungsbürsten für Fahrzeugräder ergibt sich das Problem, dass durch eine Rotationsbewegung quer zu den Speichen einer Radfelge Behandlungsborsten, die während der Waschbewegung in den Zwischenraum zwischen den Speichen eintauchen, auf Grund der Querbewegung und der Abstützung an der nächsten Speichenkante in Bewegungsrichtung nach hinten ausgelenkt werden. Diese Borsten üben für die Reinigung keinen waschaktiven Effekt aus. Dadurch, dass sich die Borsten gegenseitig abstützen und die bereits nach hinten ausgelenkten Borsten das Eingreifen der nachfolgenden Borsten behindern, wird dieser Effekt noch verstärkt.

Aus der EP 2 287 053 B1 ist eine Vorrichtung zur Reinigung von Fahrzeugrädern bekannt. Die Vorrichtung enthält einen um eine Zentralachse drehbaren und durch einen Antriebsmotor rotatorisch angetriebenen Drehkörper mit Reinigungselementen. Der Drehkörper weist zudem Drehteller auf, die durch die Drehung des Drehkörpers nicht nur um die Zentralachse, sondern über ein Getriebe auch um ihre eigene Längsachse gedreht werden.

Eine ähnliche Vorrichtung ist in der EP 3 246 217 A1 beschrieben. Sie weist eine ringförmige Hauptbürste auf, die um eine Zentralachse rotiert. Ferner rotiert eine zentrale Bürste um die Zentralachse. Des Weiteren sind Zwischenbürsten innerhalb der ringförmigen Hauptbürste angeordnet. Wenn im Betrieb die Bürsten in Kontakt mit einem zu reinigenden Rad kommen, führen die Zwischenbürsten sowohl eine Drehung um die Zentralachse als auch eine Drehung um die eigene Achse aus.

Auch aus der EP 1 561 658 A2 ist eine Waschvorrichtung für Fahrzeugreifen bekannt, bei welcher eine außerhalb einer Hauptachse angeordnete Bürste sowohl um die eigene Achse als auch um die Hauptachse drehbar gelagert ist.

Die GB 2 082 991 A beschreibt eine Vorrichtung zum Waschen von Fahrzeugrädern mit einer scheibenförmigen Waschbürste, die exzentrisch auf einer drehbaren Scheibe angeordnet ist. Schließlich ist aus der EP 3 266 342 A1 eine Bürste bekannt, deren Borsten an einer Basisplatte so befestigt sind, dass sie in radialer und nicht radialer Richtung schräg stehen.

Aus der DE 20 2011 110 362 U1 ist eine weitere Radwaschvorrichtung bekannt.

Es ist die Aufgabe der vorliegenden Erfindung, eine Bürste der eingangs genannten Art bereitzustellen, mittels welcher das Waschergebnis bei einer automatischen Reinigung von Fahrzeugfelgen verbessert werden kann.

Diese Aufgabe wird erfindungsgemäß durch eine Bürste mit den Merkmalen des Anspruchs 1 gelöst. Vorteilhafte Aus- und Weiterbildungen ergeben sich aus den abhängigen Ansprüchen. Die erfindungsgemäße Bürste ist dadurch gekennzeichnet, dass der Abstand der Zentralachse zur Längsachse kleiner oder gleich dem Wirkradius der Nebenbürste ist. Der Abstand der Zentralachse zur Längsachse ist insbesondere kleiner als der Wirkradius der Nebenbürste. Erfindungsgemäß wird unter dem Wirkradius der Nebenbürste der Radius des Bereichs verstanden, den die Nebenbürste bei einer Rotation lediglich um die eigene Längsachse überstreicht. Ist die Längsachse der Nebenbürste nicht mittig in der Nebenbürste angeordnet, ist der Wirkradius bei gleicher Größe der Nebenbürste größer als bei einer mittig angeordneten Längsachse. Der Wirkradius kann zudem von der Position, an welcher das Reinigungselement angebracht ist, bestimmt werden. Je näher am Rand der Nebenbürste ein Reinigungselement angebracht ist, desto größer ist der Wirkradius der Nebenbürste.

Die erfindungsgemäße Bürste kann insbesondere zur Reinigung von Fahrzeugfelgen verwendet werden, deren Durchmesser so klein ist, dass die Nebenbürste über den äußeren Umfang hinausreicht. Eine Fahrzeugfelge umfasst im Allgemeinen Speichen, die in der Mitte der Felge zu einer Radnabe zusammenlaufen, und ein Felgenbett, welches beim äußeren Umfang der Fahrzeugfelge angeordnet ist. Durch die spezielle Geometrie der erfindungsgemäßen Bürste reicht der Wirkradius der Nebenbürste bei entsprechender Anordnung der Bürste relativ zur Fahrzeugfelge zumindest bis zur Mitte der Fahrzeugfelge. Eine Projektion einer Bewegung eines Reinigungselementes der Nebenbürste auf die Fahrzeugfelge ergibt dann eine Längsbewegung entlang der Speichen, wobei bevorzugt auch die Radnabe überstrichen wird. Die Reinigungselemente treffen zumindest in einem spitzen Winkel auf die Speichen, d.h. die Tangente ihrer Trajektorie schließt einen spitzen Winkel mit der Oberfläche der Speiche ein. Im Bereich des Felgenbettes wird hingegen von der Nebenbürste eine Wischbewegung nach außen und wieder zurück durchgeführt. Durch die spezielle Geometrie der erfindungsgemäßen Bürste wird vorteilhafterweise verhindert, dass im Reinigungsbetrieb Reinigungselemente der Bürste an den Speichenkanten abknicken und dabei für den Waschvorgang inaktiv werden. Weiterhin kann durch die Kombination der Nebenbürste mit der Hauptbürste die Waschbewegung der Nebenbürste mit einer herkömmlichen Waschbewegung der Hauptbürste kombiniert werden, um ein verbessertes Waschergebnis zu erzielen.

Bei den bekannten mehrteiligen Reinigungsbürsten mit überlagerten Rotationsbewegungen verhindert die Geometrie eine effektive Längsbewegung entlang der Felgen vom Felgenbett bis zur Radnabe. Durch ein Rotation der Nebenbürsten, die keine Längsbewegung entlang der gesamten Felge erzeugt, werden die negativen Abstützeffekte und die dadurch einhergehende Reduzierung der Waschleistung nur in begrenzten Bereichen aufgehoben

In einer Ausgestaltung ist die Summe des Abstands der Zentralachse zur Längsachse und des Wirkradius der Nebenbürste größer als x mal dem Radius der Hauptbürste, wobei der Faktor x größer oder gleich 0,8 ist, insbesondere größer oder gleich 0,9 ist und bevorzugt größer oder gleich 1 ist. Damit die Reinigungselemente der Nebenbürste nicht zu weit über das zu reinigende Felgenbett hinausreichen, sollte der Faktor x jedoch kleiner als 1,2, insbesondere kleiner als 1,1 sein. Hierdurch wird vorteilhafterweise erreicht, dass der Wirkradius der Nebenbürste bei entsprechender Anordnung der Bürste relativ zur Fahrzeugfelge sowohl über die Mitte der Fahrzeugfelge hinaus reicht als auch zumindest bis in die Nähe des Felgenbetts der Fahrzeugfelge reicht. Ist der Faktor x gleich 1, entspricht der aktive Waschbereich der Nebenbürste zumindest dem der Hauptbürste. Im Betrieb reicht der Wirkradius der Nebenbürste dann bis zum Felgenbett oder darüber hinaus. Der Faktor x kann dabei in Abhängigkeit von der Größe der zu reinigenden Felge gewählt werden. Bei einer größeren Felge ist der Faktor x größer als bei einer kleineren Felge. Bei einer kleineren Felge kann es nämlich beispielsweise ausreichen, dass die äußersten Reinigungselemente der Nebenbürste nur auf bis zu 80 % an den äußeren Rand der zu reinigenden Felge heranreichen. Bei einer größeren Felge ist es hingegen bevorzugt, dass die äußersten Reinigungselemente der Nebenbürste bis zum äußeren Rand der Felge heranreichen.

Durch die erfindungsgemäße Vorrichtung kann eine Überlagerung von drei Bewegungsrichtungen von Reinigungselementen erreicht werden. Zum einen führen die Reinigungselemente der Hauptbürste eine konzentrische Rotationsbewegung zur Felge um die Zentralachse aus. Zum anderen führen die Reinigungselemente der Nebenbürste im Bereich des Felgenbettes eine Wischbewegung nach außen und wieder zurück sowie eine Bewegung entlang der Speichen der Felge bis zur Radnabe aus. Hierdurch wird erreicht, dass in allen Bereichen der Felge die Reinigungselemente die Felge in einem waschaktiven Winkel überstreichen. Hierdurch wird die Reinigungsleistung erhöht. Es wird dadurch vorteilhafterweise auch verhindert, dass im Reinigungsbetrieb Reinigungselemente der Bürste an den Speichenkanten abknicken oder abgewiesen oder abgelenkt werden und dabei für den Waschvorgang inaktiv werden.

In einer weiteren Ausgestaltung ist der Abstand der Zentralachse zur Längsachse kleiner als der halbe Radius der Hauptbürste. Hierdurch wird vorteilhafterweise erreicht, dass die Nebenbürste näher an der Zentralachse als am Umfang der Hauptbürste angeordnet ist, sodass eine wirksame Reinigung der Nabe einer Fahrzeugfelge sichergestellt wird. Wenn gleichzeitig die Nebenbürste bis zum äußeren Rand reicht, um auch das Felgenbett einer Fahrzeugfelge zu reinigen, d. h. wenn der Radius der Hauptbürste kleiner als die Summe des Abstands der Zentralachse zur Längsachse und des Wirkradius der Nebenbürste ist, ragt bei dieser Ausgestaltung die Nebenbürste nicht zu weit über den Radius der Hauptbürste hinaus.

In einer weiteren Ausgestaltung ist der Abstand der Zentralachse zur Längsachse größer als y mal dem Radius der Hauptbürste, wobei y größer oder gleich 0,2, insbesondere größer oder gleich 0,3 ist. Hierdurch wird vorteilhafterweise erreicht, dass die Nebenbürste nicht zu nah an der Zentralachse angeordnet ist, so dass sichergestellt wird, dass die Reinigungselemente der Nebenbürste eine Reinigungsbewegung entlang der Speichen der Felge ausführen, d. h. ein spitzer Winkel zwischen der Reinigungsbewegung der Reinigungselemente der Nebenbürste und der Längserstreckung der Speichen gebildet wird.

In einer Ausgestaltung weist die Hauptbürste einen kreisförmigen Umfang bzw. einen kreisförmigen Umfangsabschnitt, wenn die Aussparung berücksichtigt wird, mit dem Radius der Hauptbürste auf, wobei die Zentralachse innerhalb des kreisförmigen Umfangs der Hauptbürste angeordnet ist. Die Hauptbürste kann dabei insbesondere als Kreisscheibe oder Kreisringscheibe ausgestaltet sein. Die Form der Hauptbürste wird jedoch durch die Aussparung reduziert, so dass die Hauptbürste nur einen Teil einer Kreisscheibe bzw. einer Kreisringscheibe bildet. Hierdurch kann die Bürste insbesondere an die Geometrie einer zu reinigenden Fahrzeugfelge angepasst sein.

Die Zentralachse der Hauptbürste und die Längsachse der Nebenbürste sind insbesondere im Wesentlichen parallel zueinander, bevorzugt parallel zueinander, ausgerichtet. Hierdurch kann gewährleistet werden, dass die Haupt- und die Nebenbürste bei der Reinigung parallel zur Felge ausgerichtet sind.

Die Hauptbürste weist insbesondere eine Sichelform auf, wobei die Sichelform von einer Differenzfläche zwischen einer überlappten Scheibe und einer überlappenden Scheibe gebildet wird und wobei die Aussparung zumindest eine Teilfläche der überlappenden Scheibe aufweist. Beide Scheiben sind dabei Kreisscheiben. Für die Bildung der Sichelform kann der Radius der überlappenden Scheibe im Allgemeinen größer, gleich groß oder kleiner als der Radius der überlappten Scheibe sein. Um jedoch die erfindungsgemäße Größe des Abstands der Zentralachse zur Längsachse der Nebenbürste zu gewährleisten, ist der Radius der überlappenden Scheibe insbesondere zwar kleiner als der Radius der überlappten Scheibe, die überlappende Scheibe überdeckt jedoch den Mittelpunkt und einen Umfangsabschnitt der überlappten Scheibe.

Weiterhin kann die Nebenbürste einen kreisförmigen Umfang mit einem Radius aufweisen, wobei die Längsachse der Nebenbürste innerhalb des kreisförmigen Umfangs der Nebenbürste angeordnet ist. Insbesondere ist die Längsachse der Nebenbürste in der Mitte des kreisförmigen Umfangs der Nebenbürste angeordnet. Die Nebenbürste dreht sich dann um ihre Mittelachse. Auch die Nebenbürste kann dabei eine Kreisscheibe oder ein Kreisscheibenring sein. Der Radius der Nebenbürste kann dann formpassend an den Radius der Aussparung angepasst werden. Zwischen der Hauptbürste und der Nebenbürste wird jedoch insbesondere ein Freiraum von wenigen Millimetern gelassen, um eine Reibung zwischen den beiden Körpern der Hauptbürste und der Nebenbürste zu vermeiden. Im Bereich der Aussparung ragt die Nebenbürste jedoch insbesondere über den Umfang der Hauptbürste hinaus.

Insbesondere kann der Radius der Nebenbürste im Wesentlichen gleich dem Wirkradius sein. Hierzu sind die Reinigungselemente der Nebenbürste insbesondere nahe des Randes der Kreisscheibe der Nebenbürste angeordnet sein. Unter "nahe des Randes" wird hierbei verstanden, dass zwischen den Positionen, an denen die Reinigungselemente angebracht sind und dem Rand der Kreisscheibe der Nebenbürste ein Bereich von bis zu 3 cm frei bleiben kann. Erstrecken sich die Reinigungselemente senkrecht von der Oberfläche der Nebenbürste weg, ist der Radius der Kreisscheibe dann geringfügig größer als der Wirkradius der Nebenbürste. Weiterhin können die Reinigungselemente sich auch leicht schräg von der Oberfläche der Kreisscheibe zu der zu reinigenden Fahrzeugfelge hin erstrecken. Dabei kann der Winkel den das äußerste Reinigungselement mit der Oberfläche einnimmt so gewählt werden, dass der Radius der Kreisscheibe tatsächlich mit dem Wirkradius der Nebenbürste übereinstimmt.

Durch die gleichzeitige Drehung der Nebenbürste sowohl um die Zentralachse als auch um ihre eigene Längsachse im Reinigungsbetrieb beschreibt ein Reinigungselement auf dem zu reinigenden Bereich eine Hypozykloide. Durch eine solche Bewegung kann die Überstreichung des zu waschenden Bereichs auf effektive Weise verbessert werden. Insbesondere kann die Hypozykloide eine Hypotrochoide sein. Durch die Abstimmung der Drehzahl einer Rotation um die Zentralachse zu der Drehzahl einer Rotation um die Längsachse kann die Anzahl der Wendepunkte der Hypozykloiden bzw. der Hypotrochoiden eingestellt werden.

Die Drehrichtung der Hauptbürste und die Drehrichtung der Nebenbürste sind dabei insbesondere entgegengesetzt zueinander. Dabei wird die Rotationsbewegung der Nebenbürste vorteilhafterweise aus der Rotationsbewegung der Hauptbürste abgeleitet. Hierfür kann ein feststehendes Außenzahnrad in ein Zahnrad eingreifen, welches fest mit der Längsachse der Nebenbürste verbunden ist. Insbesondere wird ein Planetengetriebe zum Übertragen der Rotation der Hauptbürste auf die Nebenbürste verwendet. Dadurch können entgegengesetzt zueinander ausgerichtete Rotationen der beiden Bürstenteile erzeugt werden. Alternativ können die gewünschten Rotationsrichtungen auch durch Getriebe ohne Außenzahnrad, Kettenantriebe oder Riemenantriebe erzeugt werden.

In einer Ausgestaltung weisen die Reinigungselemente zumindest der Nebenbürste Borsten auf, die zu Borstenbüscheln zusammengefasst sind, wobei zumindest die Borsten der Borstenbüschel derart schräg zueinander angeordnet sind, dass sie eine X-Form bilden.

Weiterhin kann zumindest die Nebenbürste in Segmente unterteilt sein, wobei in einem ersten Segment die Borstenbüschel, die eine X-Form bilden, angeordnet sind, und in einem zweiten Segment Borstenbüschel derart angeordnet sind, dass sie im Wesentlichen senkrecht zu der Oberfläche der Nebenbürste ausgerichtet sind. Insbesondere sind dabei die X-förmigen Borstenbüschel des ersten Segments länger als die Borstenbüschel des zweiten Segments. Hierdurch können die X-förmig angeordneten Borstenbüschel in Hohlräume oder Zwischenräume der Felge eintauchen, während die gerade eingesetzten Borstenbüschel die Vorderseiten der Speichen reinigen können.

Zudem sind die Borstenbüschel des ersten Segments derartig geformt, dass die X-Form dachförmig angespitzt ist. Hierdurch kann gewährleistet werden, dass während des Betriebs der Bürste immer Borsten bereitgestellt werden, die zur Felgenseite gerichtet sind und verschiedene Eintauchtiefen zwischen die Speichen aufweisen. Dadurch können auch die Felgeninnenseiten effektiv gereinigt werden.

Die Erfindung betrifft ferner eine Reinigungsvorrichtung zum Reinigen von Fahrzeugrädern mit einer solchen Bürste und Übertragungsmittel, mittels welcher eine Rotation der Hauptbürste auf die Nebenbürste übertragbar ist. Solche Übertragungsmittel bilden beispielsweise ein Planetengetriebe. Die Reinigungsvorrichtung ist insbesondere in einer herkömmlichen Fahrzeugwaschanlage angeordnet.

Die Erfindung wird nun anhand von Ausführungsbeispielen mit Bezug zu den beigefügten Zeichnungen erläutert.

Figur 1    zeigt ein Ausführungsbeispiel für eine Anordnung eines Ausführungsbeispiels der erfindungsgemäßen Bürste relativ zu einem Fahrzeugrad,

Figur 2a    zeigt ein Ausführungsbeispiel einer Geometrie einer Hauptbürste,

Figur 2b    zeigt ein Ausführungsbeispiel der erfindungsgemäßen Bürste,

Figur 3a    zeigt ein Ausführungsbeispiel für die Anordnung von Borstenbüschel,

Figur 3b　　zeigt ein Ausführungsbeispiel für die Beborstung der Nebenbürste,

Figur 4　　zeigt eine Projektion einer Bewegung eines Borstenbüschels der Nebenbürste auf eine Fahrzeugfelge im Bereich der Speichen,

Figur 5　　zeigt eine Projektion einer Bewegung eines Borstenbüschels der Nebenbürste auf eine Fahrzeugfelge im Bereich des Felgenbettes,

Figur 6　　zeigt eine Trajektorie, die eine Borstenbüschel der Nebenbürste im Betrieb der Bürste auf der Fahrzeugfelge beschreibt, und

Figur 7　　zeigt eine Projektion einer Bewegung eines Borstenbüschels der Hauptbürste auf eine Fahrzeugfelge.

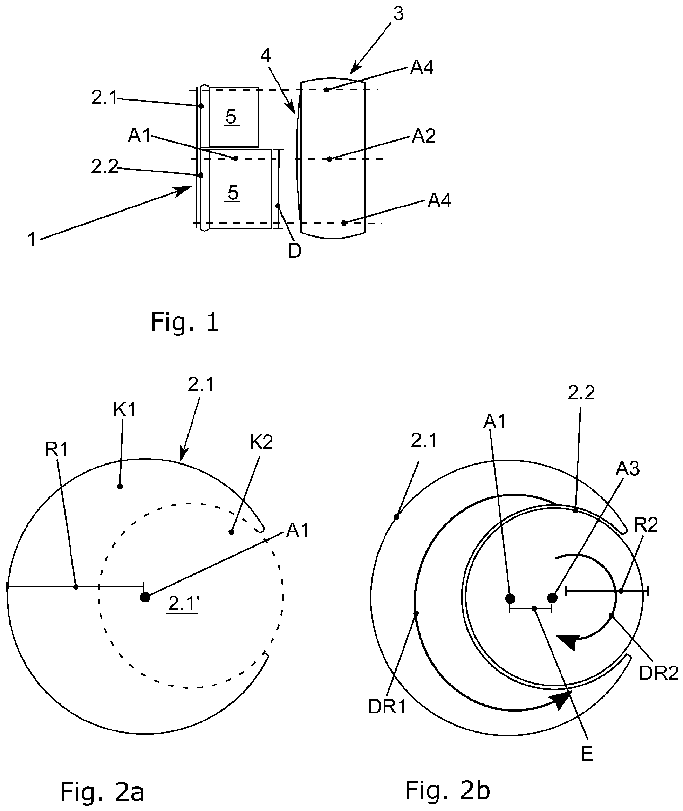

Mit Bezug zu den Figuren 1, 2a und 2b wird ein erstes Ausführungsbeispiel für eine erfindungsgemäße Bürste 1 erläutert. In Figur 1 ist dazu ein Querschnitt durch die Bürste 1 aus einer Seitenansicht gezeigt. In den Figuren 2a und 2b werden Teile der Bürste 1 aus einer Draufsicht von vorne gezeigt. Eine solche Bürste 1 ist dabei Teil einer Reinigungsvorrichtung, die wiederum in einer Waschanlage zur Fahrzeugreinigung angeordnet ist.

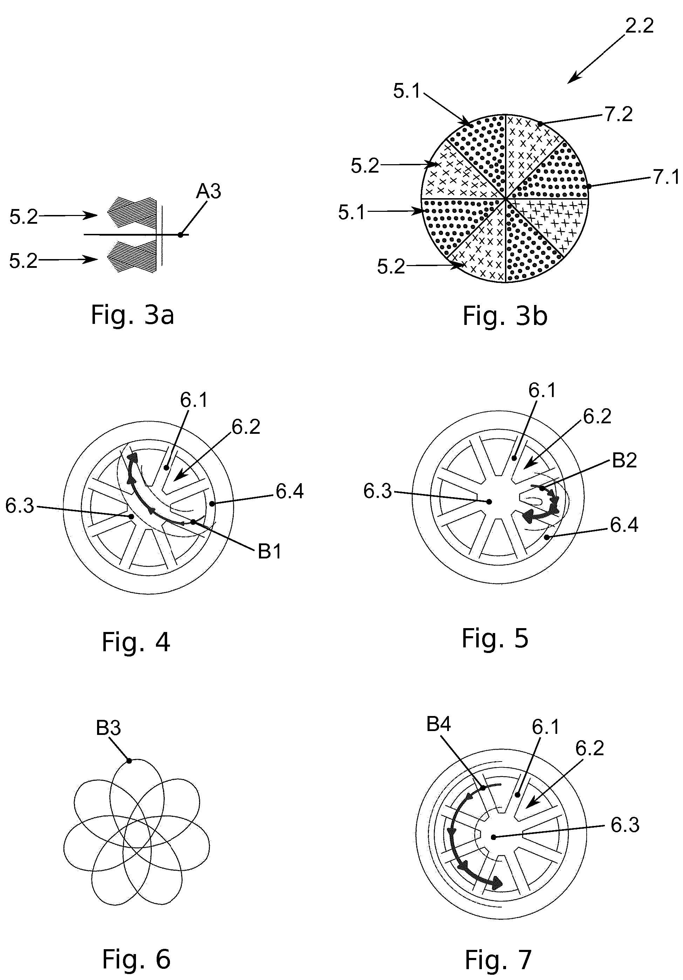

Weiterhin ist in Figur 1 ein zu reinigendes Fahrzeugrad 3 gezeigt. Das Fahrzeugrad 3 weist dabei eine Fahrzeugfelge 4 auf. Der Aufbau einer Fahrzeugfelge 4 ist beispielhaft in den Figuren 4, 5 und 7 gezeigt. Die Fahrzeugfelge 4 weist Speichen 6.1 und jeweils einen Zwischenraum 6.2 zwischen zwei benachbart zueinander angeordneten Speichen 6.1 auf. Zudem weist die Felge 4 in der Mitte einen Bereich 6.3 auf, in dem die Speichen 6.1 zusammenlaufen. Dieser Bereich wird als Radnabe 6.3 bezeichnet. Weiterhin weist die Fahrzeugfelge 4 ein an ihrem Umfang umlaufendes Felgenbett 6.4 auf.

Die Bürste 1 umfasst eine Hauptbürste 2.1 und eine Nebenbürste 2.2. Dabei weisen sowohl die Hauptbürste 2.1 als auch die Nebenbürste 2.2 einen kreisförmigen Umfang auf. Der kreisförmige Umfang der Hauptbürste 2.1 ist dabei jedoch von einer Aussparung 2.1' unterbrochen, wie es später erläutert wird.

Die Bürste 1 weist weiterhin eine Zentralachse A1 auf. Die Zentralachse A1 ist dabei die Mittelachse der Hauptbürste 2.1. Bei einem Reinigungsvorgang eines Fahrzeugrades 3 wird die Bürste 1 derart relativ zum Fahrzeugrad 3 angeordnet, dass die Zentralachse A1 der Bürste 1 und die Mittelachse A2 des Fahrzeugrades 3 zusammenfallen. Die Zentralachse A1 ist dabei innerhalb des kreisförmigen Umfangs der Hauptbürste 2.1 angeordnet.

Die Haupt- 2.1 und die Nebenbürste 2.2 weisen zudem Reinigungselemente 5 auf. Die Reinigungselemente 5 der Hauptbürste 2.1 sind dabei insbesondere senkrecht zur Oberfläche der Hauptbürste 2.1 ausgerichtet. Die Nebenbürste 2.2 weist Reinigungselemente 5 auf, die bis in die Nähe des Randes des kreisförmigen Umfangs der Nebenbürste 2.2 reichen. Die Reinigungselemente 5 sind dabei insbesondere zu Büscheln zusammengefasste Borsten. Die Nebenbürste 2.2 kann zusätzlich zu ihrer Mitte hin Borstenbüschel aufweisen.

In Figur 2a ist die Hauptbürste 2.1 gezeigt. Die Hauptbürste 2.1 rotiert dabei im Reinigungsbetrieb um die Zentralachse A1 der Bürste 1. Die Hauptbürste 2.2 weist eine Sichelform auf. Die Sichelform ist dabei von einer Differenzfläche zwischen einer Scheibe K1, die von einer zweiten Scheibe K2 überlappt wird, gebildet. Der Radius R1 der überlappten Scheibe K1 ist dabei größer als der Radius der überlappenden Scheibe K2. Der Radius R1 der überlappten Scheibe K1 entspricht dabei insbesondere dem Radius der Hauptbürste 2.1. Die Fläche der überlappenden Scheibe K2 bildet die Fläche einer Aussparung 2.1' in der Hauptbürste 2.1. Bei einer Rotation der Bürste 1 um die Zentralachse A1 rotiert die Nebenbürste 2.2 in der Aussparung 2.1', um die Zentralachse A1. Außerdem rotiert die Nebenbürste 2.2 in Betrieb um ihre Längsachse A3, die in der Mitte des kreisförmigen Umfangs der Nebenbürste 2.2 angeordnet ist.

In Figur 2b ist die gesamte Bürste 1 gezeigt, welche die Hauptbürste 2.1 und die Nebenbürste 2.2 umfasst. In der Aussparung 2.1' ist die Nebenbürste 2.2 angeordnet. Die Nebenbürste 2.2 ist dabei ebenfalls als Drehscheibe ausgestaltet, deren Form im Wesentlichen an die der Aussparung 2.1' der Hauptbürste 2.1 angepasst ist. Durch die Formpassung der Nebenbürste 2.2 ergibt sich die gesamte geometrische Grundform einer Kreisscheibe für die Bürste 1. Die Zentralachse A1 und die Längsachse A3 sind in einem Abstand E zueinander angeordnet. Der Abstand E ist dabei kleiner als der Wirkradius R2 der Nebenbürste 2.2, innerhalb dessen die Nebenbürste 2.2 eine Reinigungswirkung auf die Fahrzeugfelge 4 ausübt.

Der Durchmesser D der Nebenbürste 2.2 ist dabei derart gewählt, dass sich bei einer Anordnung der Bürste 1 relativ zum Fahrzeugrad 3 die Reinigungselemente 5, die in der Nähe des Randes der Kreisscheibe der Nebenbürste 2.2 angeordnet sind, über die Mittelachse A2 der Fahrzeugfelge 4 und über das Felgenbett 6.4, also über den Felgenrand A4 der Fahrzeugfelge 4 hinaus erstrecken. Der Wirkradius R2 erstreckt sich daher auf einer Seite bis über die Mittelachse A2 der zu behandelnden Fahrzeugfelge 4 und auf der anderen Seite bis über das Felgenbett 6.4 der Fahrzeugfelge 4 hinaus. Der Radius R1 der Hauptbürste 2.1, welcher an den Radius des Felgenbettes 6.4 angepasst ist, ist daher kleiner als die Summe des Abstands E der Zentralachse A1 zur Längsachse A3 und des Wirkradius R2 der Nebenbürste 2.2. Der Radius R1 der Hauptbürste 2.1 kann dabei so an den Radius des äußeren Randes des Felgenbettes 6.4 angepasst sein, dass dieser Radius dem Radius R1 der Hauptbürste 2.1 entspricht.

Bei anderen Ausführungsbeispielen erstreckt sich der Wirkradius R2 auf einer Seite bis über die Mittelachse A2 der zu behandelnden Fahrzeugfelge 4 hinaus und auf der anderen Seite auf bis zu zumindest 80 % oder 90 % bis zum Radius R1 der Hauptbürste 2.1 . Dieser Radius R1 der Hauptbürste 2.1 kann dabei dem Radius des äußeren Randes des Felgenbettes 6.4 entsprechen.

Bei dem hier beschriebenen Ausführungsbeispiel oder bei anderen Ausführungsbeispielen ist der Abstand E kleiner als der halbe Radius R1 der Hauptbürste 2.1. Ferner ist bei dem hier beschriebenen Ausführungsbeispiel oder bei anderen Ausführungsbeispielen der Abstand E größer als 0,2 oder 0,3 mal dem Radius R1 der Hauptbürste 2.1.

Bei dem hier gezeigten oder anderen Ausführungsbeispielen können somit die folgenden Beziehungen gelten:

$$E < R2$$

$$E + R2 > x \cdot R1,$$

wobei $x \geq 0,8$, insbesondere $x \geq 0,9$ oder $x \geq 1$ gilt,

$$E < 0,5 \cdot R1$$

$$E > y \cdot R1,$$

wobei $y \geq 0,2$, insbesondere $y \geq 0,3$ gilt.

Die Längsachse A3 der Nebenbürste 2.2 ist dabei zudem in der Mitte der Kreisscheibe der Nebenbürste 2.2 angeordnet. Weiterhin sind die Reinigungselemente 5 nahe des Randes der Kreisscheibe der Nebenbürste 2.2 angeordnet. Hierdurch wird erreicht, dass der Wirkradius R2 der Nebenbürste 2.2 im Wesentlichen gleich dem Radius der Nebenbürste 2.2 ist.

Die Rotation der Nebenbürste 2.2 leitet sich bei der Bürste 1 aus der Rotation der Hauptbürste 2.1 ab. Hierzu weist die Reinigungsvorrichtung z. B. ein Planetengetriebe auf, bei dem ein feststehendes Außenzahnrad in ein Planetenzahnrad eingreift, welches fest mit der Achse A3 der Nebenbürste 2.2 verbunden ist und welches mittels eines Steges kreisförmig um die Zentralachse A1 geführt ist. Bei einer Rotation der Hauptbürste 2.1 in Rotationsrichtung DR1 wird die Nebenbürste 2.2 in Rotationsrichtung DR2 um ihre eigene Achse A3 und gleichzeitig um die Zentralachse A1 gedreht. Dabei ist die Rotationsrichtung DR1 entgegengesetzt zur Rotationsrichtung DR2 ausgerichtet. Bei einer Rotation der Hauptbürste 2.1 rotiert die Nebenbürste 2.2 gleichzeitig mit der Aussparung 2.1' um die Zentralachse A1 und um ihre eigene Längsachse A3.

Alternativ können die gewünschten Rotationsrichtungen DR1 und DR2 auch durch Getriebe ohne Außenzahnrad, Kettenantriebe oder Riemenantriebe erzeugt werden.

Mit Bezug zu den Figuren 3a und 3b wird die Beborstung der Nebenbürste 2.2 erläutert.

Die Nebenbürste 2.2 ist in erste 7.2 und zweite Segmente 7.1 unterteilt. In den ersten Segmenten 7.2 sind die Borsten der Reinigungselemente 5 schräg zueinander ausgerichtet, und zwar so, dass sie eine X-Form bilden. Hieraus ergeben sich die Borstenbüschel 5.2. In den zweiten Segmenten 7.1 sind die Borsten der Reinigungselemente 5 auf herkömmliche Art und Weise angeordnet. Dies bedeutet, dass die zu Büscheln 5.1 zusammengefassten Borsten derart angeordnet sind, dass sie mit der Oberfläche der Nebenbürste 2.2 in dem zweiten Segment 7.1 einen 90°-Winkel oder einen Winkel leicht schräg nach außen einschließen. Hieraus ergeben sich die Borstenbüschel 5.1. Weiterhin sind die X-förmigen Borstenbüschel 5.2 länger als die Borstenbüschel 5.1. Zudem sind die Borsten der Borstenbüschel 5.2 derart ausgestaltet, dass sich für die X-Form zusätzlich eine Dachform ergibt. Durch die besondere Ausgestaltung der X-förmigen Borstenbüschel 5.2 kann gewährleistet werden, dass zu jedem Zeitpunkt zur Felgenseite gerichtete Borsten mit verschiedenen Eintauchtiefen vorhanden sind. Unter Eintauchtiefe wird dabei die Tiefe verstanden, bis zu welcher die Borstenbüschel 5.2 in den Zwischenraum 6.2, der sich zwischen den Speichen 6.1 der Fahrzeugfelge 4 befindet, eintauchen kann.

Mit Bezug zu den Figuren 4, 5 und 6 werden Projektionen der Bewegung eines Borstenbüschels 5 der Nebenbürste 2.2 im Bereich der Fahrzeugfelge 4 beschrieben.

Durch die Überlagerung der Rotation der Nebenbürste um die eigene Achse A3 und um die Zentralachse A1 ergibt sich für ein Borstenbüschel 5.1 und 5.2 eine in Figur 6 gezeigte Bewegungstrajektorie B3. Die Bewegungstrajektorie B3 stellt dabei eine Hypozykloide dar. Die Wendepunkte der Hypozykloiden B3 können dabei über das Verhältnis der Umdrehungsfrequenzen um die Zentralachse A1 und um die Achse A3 der Nebenbürste 2.2 eingestellt werden.

Die Zykloidbewegung B3 beschreibt dabei im Bereich der Speichen 6.1 eine Relativbewegung entlang der Speichen 6.1, wie in Figur 4 gezeigt. Zudem überstreicht ein Borstenbüschel 5.1 bzw. 5.2 bei der Zykloidbewegung B3 die Radnabe 6.3. Durch diese Bewegung entlang der Speichen 6.1 ergibt sich nicht das Problem, dass Borsten der Reinigungselemente 5 am Speichenrand abknicken. Es kann daher die Anzahl der effektiv am Reinigungsvorgang beteiligten Borsten erhöht werden.

Die Hypozykloide B3 ist dabei insbesondere eine Hypotrochoide. Eine Hypotrochoide ist eine Sonderform einer Hypozykloide. Eine Hypotrochoide wird durch das Abrollen eines Kreises innerhalb eines feststehenden Kreises erzeugt. Dabei beschreibt jedes der Borstenbüschel 5.1 und 5.2 eine Hypotrochoide B3. Die die Hypotrochoide B3 erzeugenden Punkte liegen dabei im vorliegenden Ausführungsbeispiel innerhalb bzw. auf dem Wirkradius R2 der Nebenbürste 2.2.

Zudem wird es durch den Durchmesser D der Nebenbürste 2.2 ermöglicht, Borstenbüschel 5.1 bzw. 5.2 über das Felgenbett 6.4 der Fahrzeugfelge 4 hinauszuführen. Im Bereich des Felgenbettes 6.4 entsteht eine Wischbewegung B2 nach außen und wieder zurück (siehe Figur 5). Es wird daher auch das Felgenbett 6.4 effektiv gereinigt.

Mit Bezug zu Figur 7 wird die Projektion der Bewegung eines Borstenbüschels der Reinigungselemente 5 der Hauptbürste 2.1 auf die Fahrzeugfelge 4 beschrieben. Ein Borstenbüschel der Hauptbürste 2.1 führt eine konzentrische Rotationsbewegung B4 zu der Fahrzeugfelge 4 aus und reinigt dadurch die Fahrzeugfelge 4 auf herkömmliche Art und Weise.

Durch die Kombination der Bewegungen B1, B2 und B4 wird ein verbessertes Reinigungsergebnis für die Fahrzeugfelge 4 erzielt.

**Bezugszeichenliste**

| 1 | Bürste |
|---|---|
| 2.1 | Hauptbürste |
| 2.1' | Aussparung |
| 2.2 | Nebenbürste |
| 3 | Fahrzeugrad |
| 4 | Fahrzeugfelge |
| 5 | Reinigungselemente |
| 5.1 | Borstenbüschel |
| 5.2 | X-förmige Borstenbüschel |
| 6.1 | Speichen |
| 6.2 | Zwischenräume zwischen Speichen |
| 6.3 | Radnabe |
| 6.4 | Felgenbett |
| 7.1, 7.2 | zweites Segment; erstes Segment |
| A1 | Zentralachse |
| A2 | Mittelachse des Fahrzeugrades |
| A3 | Längsachse |
| A4 | Felgenrand |
| B1 | Längsbewegung |
| B2 | Wischbewegung |
| B3 | Hypotrochoide |
| B4 | Bewegung eines Borstenbüschels der Hauptbürste |
| D | Durchmesser |
| DR1; DR2 | Rotationsrichtungen |
| E | Abstand Zentralachse - Längsachse |
| K1 | überlappte Scheibe |
| K2 | überlappende Scheibe |
| R1; R2 | Radius |

**Patentansprüche**

1. Bürste (1) zur Reinigung von Fahrzeugrädern (3), umfassend

eine um eine Zentralachse (A1) drehbare Hauptbürste (2.1), die einen Radius (R1) und eine Aussparung (2.1') aufweist,
eine um eine Längsachse (A3) drehbare Nebenbürste (2.2), die einen Wirkradius (R2) aufweist, wobei die Längsachse (A3) der Nebenbürste (2.2) in einem Abstand (E) von der Zentralachse (A1) angeordnet ist, der Wirkradius (R2) kleiner als der Radius (R1) der Hauptbürste (2.1) ist, die Nebenbürste (2.2) in der Aussparung (2.1') der Hauptbürste (2.1) angeordnet ist und die Nebenbürste (2.2) bei einer Rotation der Hauptbürste um die Zentralachse (A1) mit der Aussparung (2.1') mitrotiert, und
Reinigungselemente (5), die stirnseitig an der Hauptbürste (2.1) und der Nebenbürste (2.2) angeordnet sind,
**dadurch gekennzeichnet, dass**
der Abstand (E) der Zentralachse (A1) zur Längsachse (A3) kleiner oder gleich dem Wirkradius (R2) der Nebenbürste (2.2) ist.

2. Bürste (1) nach Anspruch 1,
**dadurch gekennzeichnet, dass**
die Summe des Abstands (E) der Zentralachse (A1) zur Längsachse (A3) und des Wirkradius (R2) der Nebenbürste (2.2) größer als x mal dem Radius (R1) der Hauptbürste (2.1) ist, wobei der Faktor x größer oder gleich 0,8 ist, insbesondere größer oder gleich 0,9 ist und bevorzugt größer oder gleich 1 ist.

3. Bürste (1) nach Anspruch 1 oder 2,
**dadurch gekennzeichnet, dass**
der Abstand (E) der Zentralachse (A1) zur Längsachse (A3) kleiner als der halbe Radius (R1) der Hauptbürste (2.1) ist.

4. Bürste (1) nach einem der vorhergehenden Ansprüche,
**dadurch gekennzeichnet, dass**
der Abstand (E) der Zentralachse (A1) zur Längsachse (A3) größer als y mal dem Radius (R1) der Hauptbürste (2.1) ist, wobei y größer oder gleich 0,2 ist, insbesondere größer oder gleich 0,3 ist.

5. Bürste (1) nach einem der vorhergehenden Ansprüche ,
**dadurch gekennzeichnet, dass**
die Hauptbürste (2.1) einen kreisförmigen Umfang mit dem Radius (R1) aufweist, wobei die Zentralachse (A1) innerhalb des kreisförmigen Umfangs der Hauptbürste (2.1) angeordnet ist.

6. Bürste (1) nach einem der vorhergehenden Ansprüche ,
**dadurch gekennzeichnet, dass**
die Hauptbürste (2.1) eine Sichelform aufweist, wobei die Sichelform von einer Differenzfläche zwischen einer überlappten Scheibe (K1) und einer überlappenden Scheibe (K2) gebildet wird und wobei die Aussparung (2.1') zumindest eine Teilfläche der überlappenden Scheibe (K2) aufweist.

7. Bürste (1) nach einem der vorhergehenden Ansprüche ,
   **dadurch gekennzeichnet, dass**
   die Nebenbürste (2.2) einen kreisförmigen Umfang mit einem Radius (R3) aufweist, wobei die Längsachse (A3) innerhalb des Umfangs der Nebenbürste (2.2) angeordnet ist.

8. Bürste (1) nach einem der vorhergehenden Ansprüche ,
   **dadurch gekennzeichnet, dass**
   die Längsachse (A3) der Nebenbürste (2.2) in der Mitte des kreisförmigen Umfangs der Nebenbürste (2.2) angeordnet ist.

9. Bürste (1) nach einem der vorhergehenden Ansprüche,
   **dadurch gekennzeichnet, dass**
   der Radius der Nebenbürste (2.2) im Wesentlichen gleich dem Wirkradius (R2) ist.

10. Bürste (1) nach einem der vorhergehenden Ansprüche,
    **dadurch gekennzeichnet, dass**
    die Drehrichtung (DR1) der Hauptbürste (2.1) und die Drehrichtung (DR2) der Nebenbürste (2.2) entgegengesetzt zueinander sind.

11. Bürste (1) nach einem der vorhergehenden Ansprüche,
    **dadurch gekennzeichnet, dass**
    das Reinigungselement (5) zumindest der Nebenbürste (2.2) Borsten aufweist, die zu Borstenbüscheln (5.2) zusammengefasst sind, wobei zumindest die Borsten der Borstenbüschel (5.2) derart schräg zueinander angeordnet sind, dass sie eine X-Form bilden.

12. Bürste (1) nach Anspruch 11,
    **dadurch gekennzeichnet, dass**
    zumindest die Nebenbürste (2.2) in Segmente (7.1, 7.2) unterteilt ist, wobei in einem ersten Segment (7.2) die Borstenbüschel (5.2), die eine X-Form bilden, angeordnet sind, und in einem zweiten Segment (7.1) Borstenbüschel (5.1) derart angeordnet sind, dass sie im Wesentlichen senkrecht zu der Oberfläche der Nebenbürste (2.2) ausgerichtet sind.

13. Bürste (1) nach Anspruch 12,
    **dadurch gekennzeichnet, dass**
    die Borstenbüschel (5.2) des ersten Segments (7.2) länger als die Borstenbüschel (5.1) des zweiten Segments (7.1) sind.

14. Bürste (1) nach einem der Ansprüche 12 oder 13,
    **dadurch gekennzeichnet, dass**
    die Borstenbüschel (5.2) des ersten Segments (7.2) derart geformt sind, dass die X-Form dachförmig angespitzt ist.

15. Reinigungsvorrichtung zum Reinigen von Fahrzeugrädern (3) mit einer Bürste (1) nach einem der Ansprüche 1 bis 14 und Übertragungsmitteln, mittels welcher eine Rotation der Hauptbürste (2.1) auf die Nebenbürste (2.2) übertragbar ist.

**Claims**

1. Brush (1) for cleaning vehicle wheels (3), comprising

   a main brush (2.1) rotatable about a central axis (A1), which has a radius (R1) and a recess (2.1'), an auxiliary brush (2.2) rotatable about a longitudinal axis (A3), which has an effective radius (R2), wherein the longitudinal axis (A3) of the auxiliary brush (2.2) is arranged at a distance (E) from the central axis (A1), the effective radius (R2) is smaller than the radius (R1) of the main brush (2.1), the auxiliary brush (2.2) is arranged in the recess (2.1') of the main brush (2.1) and the auxiliary brush (2.2.) rotates with the recess (2.1') when the main brush rotates about the central axis (A1), and cleaning elements (5), which are arranged on the end face on the main brush (2.1) and the auxiliary brush (2.2),
   **characterised in that**
   the distance (E) between the central axis (A1) and the longitudinal axis (A3) is less than or equal to the effective radius (R2) of the auxiliary brush (2.2).

2. Brush (1) according to claim 1,
   **characterised in that**
   the total of the distance (E) between the central axis (A1) and the longitudinal axis (A3) and of the effective radius (R2) of the auxiliary brush (2.2) is greater than x times the radius (R1) of the main brush (2.1), wherein the factor x is greater than or equal to 0.8, in particular is greater than or equal to 0.9 and preferably is greater than or equal to 1.

3. Brush (1) according to claim 1 or 2,
   **characterised in that**
   the distance (E) between the central axis (A1) and the longitudinal axis (A3) is less than half the radius (R1) of the main brush (2.1).

4. Brush (1) according to one of the preceding claims,
   **characterised in that**
   the distance (E) between the central axis (A1) and the longitudinal axis (A3) is greater than y times the radius (R1) of the main brush (2.1), wherein y is greater than or equal to 0.2, in particular is greater than or equal to 0.3.

5. Brush (1) according to one of the preceding claims, **characterised in that** the main brush (2.1) has a circular circumference with the radius (R1), wherein the central axis (A1) is arranged inside the circular circumference of the main brush (2.1).

6. Brush (1) according to one of the preceding claims, **characterised in that** the main brush (2.1) has a crescent shape, wherein the crescent shape is formed by a differentiated area between an overlapped disc (K1) and an overlapping disc (K2) and wherein the recess (2.1') has at least one partial surface of the overlapping disc (K2).

7. Brush (1) according to one of the preceding claims, **characterised in that** the auxiliary brush (2.2) has a circular circumference with a radius (R3), wherein the longitudinal axis (A3) is arranged inside the circumference of the auxiliary brush (2.2).

8. Brush (1) according to one of the preceding claims, **characterised in that** the longitudinal axis (A3) of the auxiliary brush (2.2) is arranged in the centre of the circular circumference of the auxiliary brush (2.2).

9. Brush (1) according to one of the preceding claims, **characterised in that** the radius of the auxiliary brush (2.2) is substantially identical to the effective radius (R2).

10. Brush (1) according to one of the preceding claims, **characterised in that** the rotational direction (DR1) of the main brush (2.1) and the rotational direction (DR2) of the auxiliary brush (2.2) are opposed to each other.

11. Brush (1) according to one of the preceding claims, **characterised in that** the cleaning element (5) at least of the auxiliary brush (2.2) has bristles, which are combined to form tufts of bristles (5.2), wherein at least the bristles of the tufts of bristles (5.2) are arranged diagonally to each other in such a way that they form an X shape.

12. Brush (1) according to claim 11, **characterised in that** at least the auxiliary brush (2.2) is divided into segments (7.1, 7.2), wherein the tufts of bristles (5.2), which form an X shape, are arranged in a first segment (7.2), and the tufts of bristles (5.1) are arranged in a second segment (7.1) in such a way that they are oriented substantially perpendicular to the surface of the auxiliary brush (2.2).

13. Brush (1) according to claim 12, **characterised in that** the tufts of bristles (5.2) of the first segment (7.2) are longer than the tufts of bristles (5.1) of the second segment (7.1).

14. Brush (1) according to one of claims 12 or 13, **characterised in that** the tufts of bristles (5.2) of the first segment (7.2) are shaped in such a way that the X shape comes to a point like a roof.

15. Cleaning device for cleaning vehicle wheels (3) with a brush (1) according to one of claims 1 to 14 and transmission means, by means of which a rotation of the main brush (2.1) can be transmitted to the auxiliary brush (2.2).

**Revendications**

1. Brosse (1) pour nettoyer les roues (3) d'un véhicule, comprenant :

   une brosse principale (2.1) rotative sur un axe central (A1) et présentant un rayon (R1) et un évidement (2.1'),
   une brosse secondaire (2.2) rotative sur un axe longitudinal (A3) et présentant un rayon efficace (R2), ledit axe longitudinal (A3) de la brosse secondaire (2.2) étant disposé à une distance (E) de l'axe central (A1), ledit rayon efficace (R2) étant inférieur audit rayon (R1) de la brosse principale (2.1), ladite brosse secondaire (2.2) étant disposée dans l'évidement (2.1') de la brosse principale (2.1), et ladite brosse secondaire (2.2) tournant conjointement avec l'évidement (2.1') lorsque la brosse principale tourne sur l'axe central (A1), et
   des éléments de nettoyage (5) disposés sur la face avant de la brosse principale (2.1) et de la brosse secondaire (2.2),
   **caractérisée en ce que**
   la distance (E) entre l'axe central (A1) et l'axe longitudinal (A3) est inférieure ou égale au rayon efficace (R2) de la brosse secondaire (2.2).

2. Brosse (1) selon la revendication 1, **caractérisée en ce que** la somme de la distance (E) entre l'axe central (A1) et l'axe longitudinal (A3) et du rayon efficace (R2) de la brosse secondaire (2.2) est supérieure à x fois le rayon (R1) de la brosse principale (2.1), le facteur x étant supérieur ou égal à 0,8, notamment supérieur ou égal à 0,9 et de préférence supérieur ou égal à 1.

3.  Brosse (1) selon la revendication 1 ou 2,
    **caractérisée en ce que**
    la distance (E) entre l'axe central (A1) et l'axe longitudinal (A3) est inférieure à la moitié du rayon (R1) de la brosse principale (2.1).

4.  Brosse (1) selon l'une des revendications précédentes,
    **caractérisée en ce que**
    la distance (E) entre l'axe central (A1) et l'axe longitudinal (A3) est supérieure à y fois le rayon (R1) de la brosse principale (2.1), y étant supérieur ou égal à 0,2, notamment supérieur ou égal à 0,3.

5.  Brosse (1) selon l'une des revendications précédentes,
    **caractérisée en ce que**
    la brosse principale (2.1) présente un périmètre circulaire de rayon (R1), l'axe central (A1) étant disposé à l'intérieur du périmètre circulaire de la brosse principale (2.1).

6.  Brosse (1) selon l'une des revendications précédentes,
    **caractérisée en ce que**
    la brosse principale (2.1) présente une forme de faucille, la forme de faucille étant constituée par une surface différentielle entre un disque de dessous (K1) et un disque de dessus (K2) et l'évidement (2.1') présentant au moins une surface partielle du disque de dessus (K2).

7.  Brosse (1) selon l'une des revendications précédentes,
    **caractérisée en ce que**
    la brosse secondaire (2.2) présente un périmètre circulaire de rayon (R3), l'axe longitudinal (A3) étant disposé à l'intérieur du périmètre de la brosse secondaire (2.2).

8.  Brosse (1) selon l'une des revendications précédentes,
    **caractérisée en ce que**
    l'axe longitudinal (A3) de la brosse secondaire (2.2) est disposé au centre du périmètre circulaire de la brosse secondaire (2.2).

9.  Brosse (1) selon l'une des revendications précédentes,
    **caractérisée en ce que**
    le rayon de la brosse secondaire (2.2) est sensiblement égal au rayon efficace (R2).

10. Brosse (1) selon l'une des revendications précédentes,
    **caractérisée en ce que**

le sens de rotation (DR1) de la brosse principale (2.1) et le sens de rotation (DR2) de la brosse secondaire (2.2) sont opposés l'un à l'autre.

11. Brosse (1) selon l'une des revendications précédentes,
    **caractérisée en ce que**
    l'élément de nettoyage (5) d'au moins la brosse secondaire (2.2) présente des poils qui sont regroupés en touffes de poils (5.2), au moins les poils des touffes de poils (5.2) étant disposés obliquement les uns par rapport aux autres pour former un X.

12. Brosse (1) selon la revendication 11,
    **caractérisée en ce que**
    au moins la brosse secondaire (2.2) est divisée en segments (7.1, 7.2), lesdites touffes de poils (5.2) formant un X étant disposées dans un premier segment (7.2), et des touffes de poils (5.1) étant disposées dans un deuxième segment (7.1) de façon à être orientées sensiblement perpendiculairement à la surface de la brosse secondaire (2.2).

13. Brosse (1) selon la revendication 12,
    **caractérisée en ce que**
    les touffes de poils (5.2) du premier segment (7.2) sont plus longues que les touffes de poils (5.1) du deuxième segment (7.1).

14. Brosse (1) selon l'une des revendications 12 et 13,
    **caractérisée en ce que**
    les touffes de poils (5.2) du premier segment (7.2) sont formées de telle manière que la forme en X est pointue en forme de toit.

15. Dispositif de nettoyage de roues de véhicule (3) comprenant une brosse (1) selon l'une des revendications 1 à 14 et des moyens de transmission au moyen desquels une rotation de la brosse principale (2.1) peut être transmise à la brosse secondaire (2.2).

Fig. 1

Fig. 2a

Fig. 2b

Fig. 3a

Fig. 3b

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2287053 B1
- EP 3246217 A1
- EP 1561658 A2
- GB 2082991 A
- EP 3266342 A1
- DE 202011110362 U1